# EUROPEAN PATENT APPLICATION

(11) **EP 4 223 120 A1**
(43) Date of publication of application: **09.08.2023**
(21) Application number: 23386007.1
(22) Date of filing: 31.01.2023
(51) Int. Cl.: A01M 31/00, H04Q 9/00

(54) **ELECTRONIC PEST MONITORING SYSTEM**

(30) Priority: 02.02.2022 GR 20220100109
(71) Applicant: Gkekas, Spyridon, 55535 Pilea Thessaloniki (GR)
(72) Inventor: Gkekas, Spyridon, 55535 Pilea Thessaloniki (GR)

(57) **Abstract**

The present invention refers to an Electronic Pest Monitoring System consisting of the electronic pest detection sensor - or a set of those ones that will be needed to cover a supervised area - the data receiving and sending terminal and the data collection and processing software package which is installed on the user's computer or in the cloud. After the installation of the Electronic Pest Monitoring System, the user may record all the events related to the presence of pests in real time and concerning his point of interest, in order to deal with the problem immediately.

## Description

This Electronic Pest Monitoring System concerns an integrated method of collecting, transmitting and processing data and information about the activity of pests in monitored areas, in order to achieve the most efficient recording as well as timely and effective treatment thereof in order to limit and eliminate unwanted side effects that can be caused in the areas of interest. It is a set of electronic pest detection sensors, assisted by a data receiving and sending terminal and data collection and processing software package. The data collection and processing software package can be installed and run locally on a computer or, more generally, operate via a network server.

Through the Electronic Pest Monitoring System, the area of interest can be continuously monitored and the data collected by the data receiving and sending terminal immediately be sent after previous detection of the presence of pests by the electronic pest detection sensor. The data receiving and sending terminal then sends the collected data to the user's computer or network server on which the data collection and processing software package is already installed. The data is then stored in a database and remains available for presentation and processing.

As pests are considered all small-sized animals that one can encounter in urban and peri-urban environments (squirrels, weasels, ferrets, rats, moles, etc.) and which either through their presence or through their behaviour and action, are harmful to human health and detrimental to productive activity.

The classic method of dealing with pests is based on an on-site visit by technicians from public health companies, who carry out a visual inspection of the area with the naked eye and, depending on the existing or potential threat, carry out the necessary suppressive or corrective actions to eliminate the problem. The above-mentioned visual inspection with the naked eye usually has a short duration and requires the physical presence of the technician in the area under inspection.

It has been proven that the method followed so far is not sufficient to completely deal with the problems created by the pests in the area of interest, since the time of the visual inspection is limited and concerns a specific period of time during which either the pests may not be present in the area of interest or because the natural human presence leads them to an instinctive defense of hiding so that they are not noticed by humans.

Besides, pests are active mainly at night when there is limited or zero human physical presence in the area.

The whole behaviour of pests due to their natural defense to cover wherever there is a human presence, creates the false conclusion that this space is safe from them, with the result that there is no full notice of their real activity.

The section of the Electronic Pest Monitoring System, which consists of the electronic sensors for detecting pests and the data receiving and sending terminal, is installed in the area we want to control, after studying the area and finding the potential entry and exit points of the pests. Installing the electronic pest detection sensors is carried out at places of the facilities at indoor and outdoor spaces and in such a way that there is universal and continuous coverage of the area of interest. Initially, once the electronic pest detection sensors have been installed in the area under surveillance, the data receiving and sending terminal is placed immediately after in a secure area of the surveillance facilities and at a place where the data could be continuously and interruptedly collected from the whole of electronic pest detection sensors. After completing the above two installation steps, the system is operationally ready and can detect any presence of pests in the predefined coverage areas. In the operation phase of the system in the surveillance area, the data receiving and sending terminal records the real-time data sent by the electronic pest detection sensors. According to the time schedule that has been preselected, the data receiving and sending terminal sends the recorded data either at a predetermined time or at regular intervals, to the data collection and processing software package installed on the computer of the user or on the network server.

The following are defined as advantages of this electronic pest detection system:
- Limitation of on-site inspections in the area of interest by the technical crews of the Public Health companies.
- Complete and seamless control in real time of the facilities of the area of interest, in contrast to the current practice of the on-site visual inspection.
- Unlimited in terms of time surveillance and control of the area of interest.
- Ability to locate the entry-exit points of the pests with spatial and time precision.
- Immediate detection and notification of the user about the presence of pests in his area, so that he can take the necessary actions to deal with them in time.
- Reduction of possibilities of damage to critical mechanical and production equipment due to the immediate detection of pest activity.

The timely treatment of pests is considered necessary since pests cause a variety of damages inside and outside inhabited areas, such as damage of electronic, electrical and mechanical components, without being noticed due to their natural defense-movement and their size.
- Human presence makes it difficult to impossible to detect the pests due to their natural defense against humans. This Electronic Pest Monitoring System does not emit any sound or flash and therefore is not perceived by the pests to alarm or warn them.
- The fact that the electronic pest detection sensor does not require the presence of wiring for sending data and powering it, gives the advantage of its quick installation and autonomous operation, without interfering with the functionality and aesthetics of the space in which it is installed.
- Full control of the supervised area at night when the pest activity is particularly high due to the limited human presence.
- Powering the electronic detection sensors from a battery provides the advantage of flexible placement without restrictions at any point deemed necessary.
- Increased operational autonomy of the electronic pest detection sensors due to their ability to remain in a state of inactivity - reduced need for electricity until they detect pest activity.
- It has screw mounting sockets which ensure its stable placement on any surface.
- Finally, in order to ensure the greatest possible detection efficiency and in order to reduce possible limitations in terms of placement, the electronic pest detection sensor is provided with the possibility of switching the detection angle with the two arms located on either side, right and left. In this way and after being installed on any surface, the electronic pest detection sensor can be turned to any point of interest.
- The data receiving and sending terminal has a screen that displays the number of recorded entry-exit events and the presence of pests in the supervised area every 24 hours. In this way, anyone in charge of the system can know whether there was an infestation - presence of pests in the area under surveillance.
- On one side of the data receiving and sending terminal there is a USB - microUSB cable connector which is necessary to power the signal receiving terminal from a wall outlet to ensure its continuous operation.
- Like the electronic pest detection sensor, the data receiving and sending terminal has also screw sockets in the lower part to ensure stability during installation and its safety.

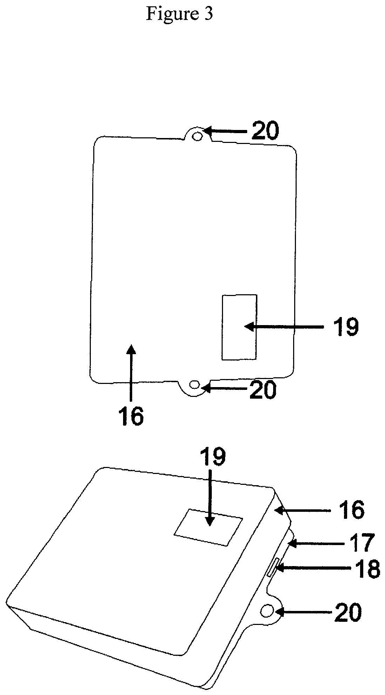

In order to understand the Electronic Pest Monitoring System, we list the numerical correspondence of the materials as well as the following explanatory diagrams:

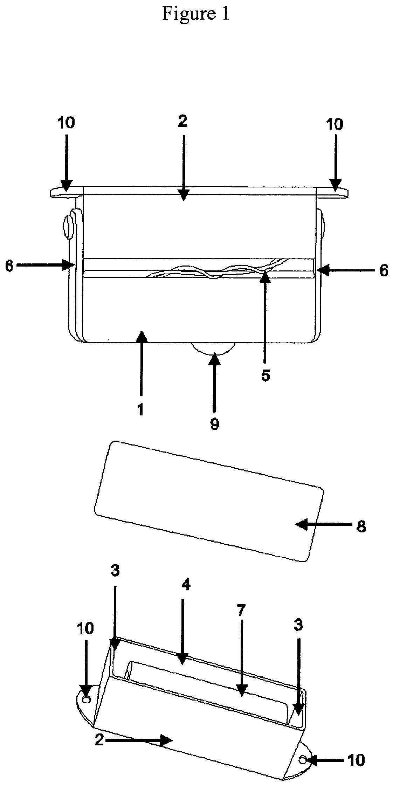

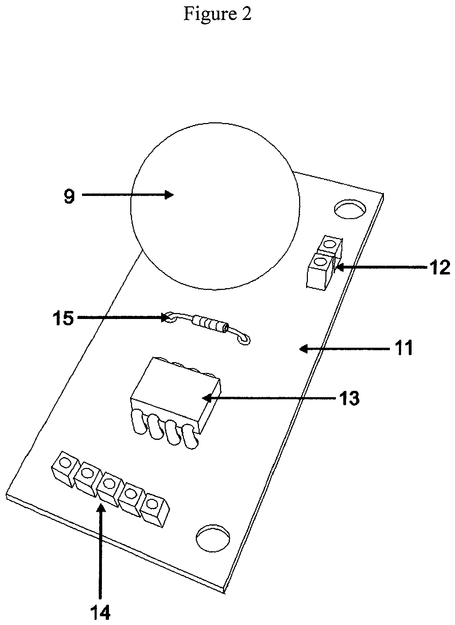

Figure 1 shows the electronic pest detection sensor consisting of the detection sensor box (1) and the battery case (2) for powering the electronic pest detection sensor circuit (Figure 2) and which (1) and (2) are joined together by the two, right and left, directional arms (6).
   No (3) shows the contact terminals in the battery case (2) for the battery (7).
   No (4) shows the mounting place of the battery.
   No (5) shows the wires that supply power to the pest detection sensor circuit (Figure 2) from the battery (7) through the power port (12).
   No (6) shows the two arms that serve to direct the detection sensor box (1).
   No (7) shows the battery.
   No (8) shows the magnetic cap covering the mounting place (4) of the battery (7).
   No (9) shows the detection sensor (PIR sensor).
   No (10) shows the two screw sockets, right and left of the battery case (2), necessary to securely mount the electronic pest detection sensor (Figure 1) on vertical and horizontal surfaces.
Figure 2 shows the circuit of the electronic pest detection sensor (Figure 1) and in more detail the following:
   No (11) shows the electronic board.
   No (12) shows the detection sensor power port.
   No (13) shows the detection sensor microcontroller.
   No (14) shows the module port in the 433 Mhz frequency band.
   No (15) shows the circuit's resistance.
   Regarding the data receiving & sending terminal in Figure 3, we have the following:
   No (16) shows the upper part of the data receiving - sending terminal box (Figure 3).
   No (17) shows the lower part of the data receiving - sending terminal box (Figure 3).
   No (18) shows the USB - microUSB powering port (power - programming).
   No (19) shows the event log screen.
   No (20) shows the data receiving-sending terminal mounting screw sockets (Figure 3).

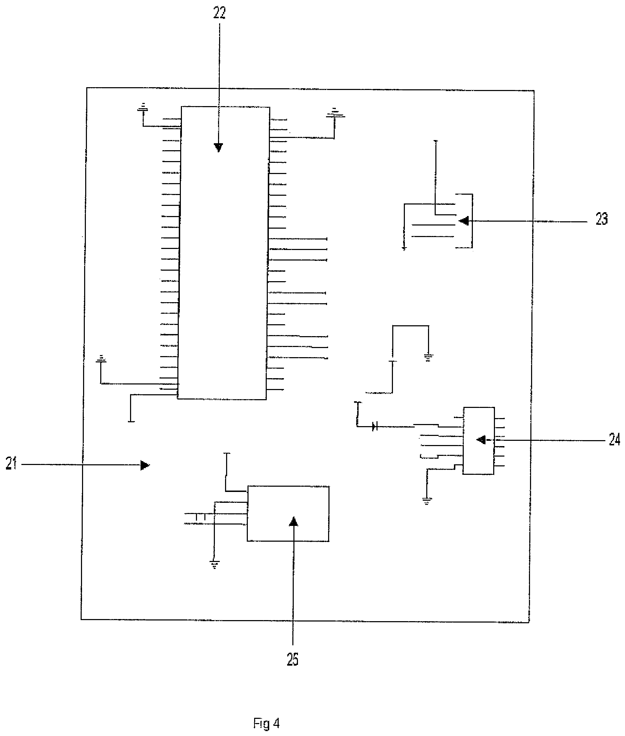

Figure 4 shows the circuit of the data receiving and sending terminal (Figure 3) and in more detail the following:
   No (21) shows the electronic board of the terminal receiving-sending data circuit (Figure 3).
   No (22) shows the microcontroller of the data receiving and sending terminal (Figure 3).
   No (23) shows the connection port of the event log screen (19).
   No (24) shows the GSM module.
   No (25) shows the interface module.
Figure 5 shows the TCP server - PMS bridge.
Figure 6 shows the PMS centre.
Figure 7 shows the Terminal Setup.

As an example of the operation of the pest detection system, the description of the operation of the individual systems follows based on their reference numbering.

The electronic pest detection sensor (Figure 1) is placed on a surface of the monitored area, and is secured to the surface with a screw that is fixed in the fixing screw sockets (10). Inside the battery case (2) we place the battery (7) so that the electronic pest detection sensor circuit (Figure 2) and in particular the detection sensor (9) is put into operation. The power supply of the electronic pest detection sensor circuit is achieved with the power supply cables (5). After we have placed the battery (7) we apply the magnetic cap (8) to the battery case (2).

By turning the two directionality arms (6) to any angle we choose, we can precisely target our point of direct interest.

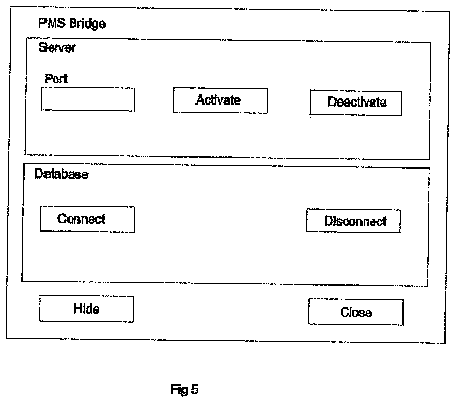

Then we install in the area of interest, the data receiving - sending terminal (Figure 3) securing it with a screw fixed to the screw sockets (20) on the surface we have chosen. We place the SIM card in the GSM module (24) and in this way we achieve connecting the data receiving-sending terminal (Figure 3) to Internet so that the information packages are sent to the data collection and processing software package. The information package through the TCP server - PMS bridge (Figure 5) is stored either in the database located on the computer where the data collection and processing software package is installed, or directly in the database when in cloud.

We supply power to the data receiving and sending terminal (Figure 3) through a USB - microUSB cable, one end of which we insert into the USB - microUSB port (18). An indicator light on the event log screen (19) indicates that the data receiving and sending terminal (Figure 3) is operational and in communication with the electronic pest detection sensor (Figure 1).

Communication is achieved automatically through the modules (14), (25) present respectively in the circuit of the electronic pest detection sensor (Figure 2) and in the circuit of the data receiving-sending terminal (Figure 4) without requiring any additional setting.

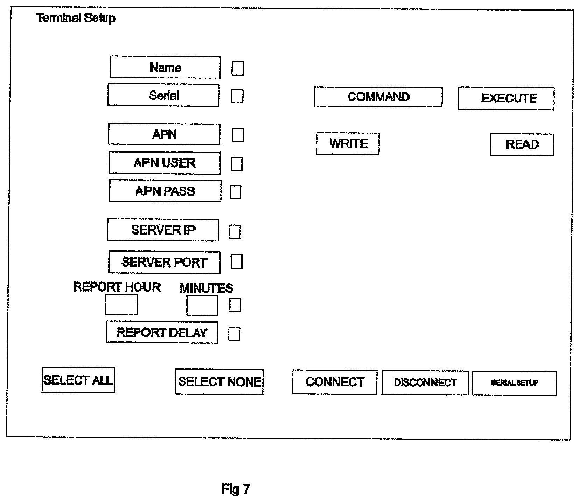

Then, with the Terminal setup program (Figure 7) that is installed on a computer, we set the operating parameters of the specific data receiving and sending terminal (Figure 3).

The detection sensor (9) detects the movement of the pest and sends a pulse to the detection sensor microcontroller (13).

The microcontroller of the detection sensor (13) comes out of sleep mode, registers the voltage of the battery (7) and sends to the data receiving - sending terminal (Figure 3) an information package containing the serial number of the electronic pest detection sensor (Figure 1) which detected motion as well as the battery status (7).

The data receiving-sending terminal (Figure 3) through the interface module (25) receives the information package from the electronic pest detection sensor (Figure 1) and stores it with a date and time of a specific format. Depending on the operating mode, the terminal microcontroller (22) either sends it in real time to the server or collects the information packages from the electronic pest detection sensors (Figure 1) and sends them to the server at a predetermined time.

The event log screen (19) records and displays the event simultaneously with the reception of the information package from the receiving-sending data terminal (Figure 3).

If we choose to send the information packages from the data receiving and sending terminal (Figure 3) to the user's computer, then we use the TCP server - PMS Bridge (Figure 5).

The TCP server - PMS bridge (Figure 5) "listens" to a specific port to which we have sent the information packages from the data receiving and sending terminal (Figure 3). When it receives the information packages it stores them in the database.

If we choose to send the information packages from the data receiving and sending terminal (Figure 3) to the cloud then we bypass the TCP server - PMS bridge (Figure 5).

The database can be installed either locally on the user's computer or in the cloud.

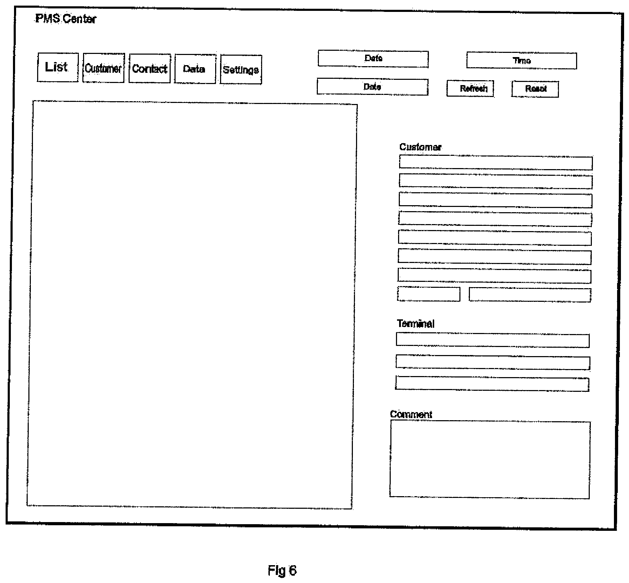

Finally, with the data display and processing software PMS centre (Figure 6) we have the ability to display and process the data we have received from the data receiving and sending terminal (Figure 3) and which have been stored in the database.

## Claims

1. The Electronic Pest Monitoring System is a data collection, transmission and processing system, which includes: a set of electronic pest detection sensors (Figure 1), a data receiving and sending terminal (Figure 3) and the data collection and processing software package (Figures 5, 6, 7) which runs locally on a computer or in the cloud. It is a standalone and wireless system. Its autonomy lies in the fact that its operation is ensured only by connecting its terminal for receiving and sending data (Figure 3), to an external source of electricity (electrical socket).

2. The electronic pest detection sensor (Figure 1) consists of the pest detection sensor box (1), the battery case (2) for the power supply of the electronic pest detection sensor circuit (Figure 2), which (1) and (2) are joined together with the two right and left directionality arms (6).

3. The box (1) of the pest detection sensor contains: the electronic board (11), the power supply port (12) of the detection sensor, the microcontroller (13) of the detection sensor, the module port in the frequency band of 433 Mhz (14), the circuit's resistance (15) and the detection sensor (9).

4. The detection sensor (9) is a PIR type high sensitivity and range sensor. The current consumption of the electronic pest detection sensor (Figure 1) is in the order of microamperes (mA). The detection range of the detection sensor (9) is between 0.3 - 5 meters.

5. The data receiving and sending terminal (Figure 3) consists of: The two parts of the box (upper and lower part), (16,17), the USB - microUSB power port (18), the event log screen (19), the mounting screw sockets (20).

6. The circuit of the data receiving and sending terminal (Figure 4) consists of the electronic board (21), the microcontroller (22), the connection port (23) of the event log screen (19), the GSM module (24), the interface module (25).

7. The electronic pest detection sensor (Figure 1) is powered by a battery (7) and the data receiving and sending terminal (Figure 3) is powered by an external power source (electrical socket).

8. The electronic pest detection sensor (Figure 1) when it detects motion in the monitored area sends a package of information to the data receiving and sending terminal (Figure 3). The electronic pest detection sensor (Figure 1) works with the data receiving & sending terminal (Figure 3) without any setting required.

9. The data receiving and sending terminal (Figure 3) via USB-microUSB is connected to an external power source (electrical socket) and automatically communicates with the electronic sensors for detecting pests (Figure 1). It receives the packages of information sent by the electronic pest detection sensors (Figure 1) when they detect movement in the monitored area.

10. The data receiving and sending terminal (Figure 3) depending on the mode of operation either sends the information package in real time to the server or collects the packages from the electronic pest detection sensors (Figure 1) and sends them to the server at a predetermined time. We have the option to send the information packages from the data receiving and sending terminal (Figure 3) either to the computer where the database is installed using the TCP server - PMS bridge as an intermediary program (Figure 5), or directly to the server (cloud) where the database is installed without the use of the intermediary TCP server - PMS bridge program (Figure 5).

11. The Electronic Pest Monitoring System database can be located either on a computer or in the cloud.

12. The TCP server - PMS bridge (Figure 5) "listens" to a specific port to which we have sent the data packages from the Data Receiving and Sending Terminal (Figure 3). When it receives the data packages it stores them in the database. If the database is installed in the cloud, the data is sent directly to the database located in the cloud without using the TCP server - PMS bridge (Figure 5).
